# EUROPEAN PATENT APPLICATION

(11) **EP 1 314 914 A2**
(43) Date of publication of application: **28.05.2003**
(21) Application number: 02024893.6
(22) Date of filing: 08.11.2002
(51) Int. Cl.: F16H 61/00, F16H 37/08

(54) **An intrinsically safe control system for a variable-ratio transmission**

(30) Priority: 23.11.2001 IT PD20010274
(71) Applicant: CARRARO S.P.A., I-35011 Campodarsego (Padova) (IT)
(72) Inventor: Cesaroni, Antonio Francisco, 35010 Vigodarzere (PD) (IT)
(74) Representative: Fabris, Stefano (IT)

(57) **Abstract**

A control system for a variable-ratio transmission (1) of the type in which the variation is controlled by displacing two elements of the transmission relative to one another along a displacement axis, and in which these elements can give rise to a thrust having a component along the displacement axis, which component is correlated with the torque transmitted by the transmission, is described. The system includes operative control means interposed between actuator means and at least one of the two transmission elements in order to instigate the displacement upon the operation of the actuator means; resilient means (106a, 106b) are also interposed between the operative control means and the actuator means and can yield resiliently as a result of the thrust component along the displacement axis when the said component exceeds a predetermined threshold value corresponding to a value of the maximum torque transmitted by the transmission.

## Description

The subject of the present invention is an intrinsically safe control system for a variable-ratio transmission, particularly of the type which is generally described by the acronym "CVT", which is derived from the term "continuously variable transmission". These transmissions enable the transmission ratio between a drive input and a drive output to be varied, preferably continuously, preferably by varying the diameter of contact between a driving element and a driven element mutually engaged for friction driving. Currently-known systems for controlling the variation of the transmission ratio are normally of hydraulic, mechanical or electromechanical type and are provided with electronic controls and/or torque limiters having the function of intervening in the transmission when the value of the twisting moment exceeds the safety and/or reliability threshold for the components of the transmission. In practice, for completely safe control of a transmission, two devices are therefore required, one purely for implementing the desired variation control and the other dedicated to detecting and consequently limiting the torque transmitted. This means that known systems involve considerable cost as well as both structural and functional complexity and fragility.

The main task of the present invention is to provide a control system which is designed structurally and functionally to combine both the control function and the safety function of a variable-ratio transmission.

Within the scope of this task, an object of the invention is to provide an intrinsically safe control system particularly but not exclusively suitable for the operative control of a mechanical transmission with a continuously variable transmission ratio which is the subject of a patent application by the same Applicant, of the same date, and an embodiment of which is described below.

Another object of the invention is to provide an intrinsically safe control system which at the same time is simple, reliable, and requires little or no maintenance.

This task and these objects are achieved by the invention by means of an intrinsically safe control system for a variable-ratio transmission formed in accordance with the appended claims.

The characteristics and the advantages of the invention will become clearer from the detailed description of a preferred embodiment thereof, described by way of non-limiting example, with reference to the appended drawings, in which:
Figure 1 is a schematic front elevational view of a control system associated with a variable-ratio transmission according to the present invention,
Figure 2 is a partial schematic view of the transmission of Figure 1, in section,

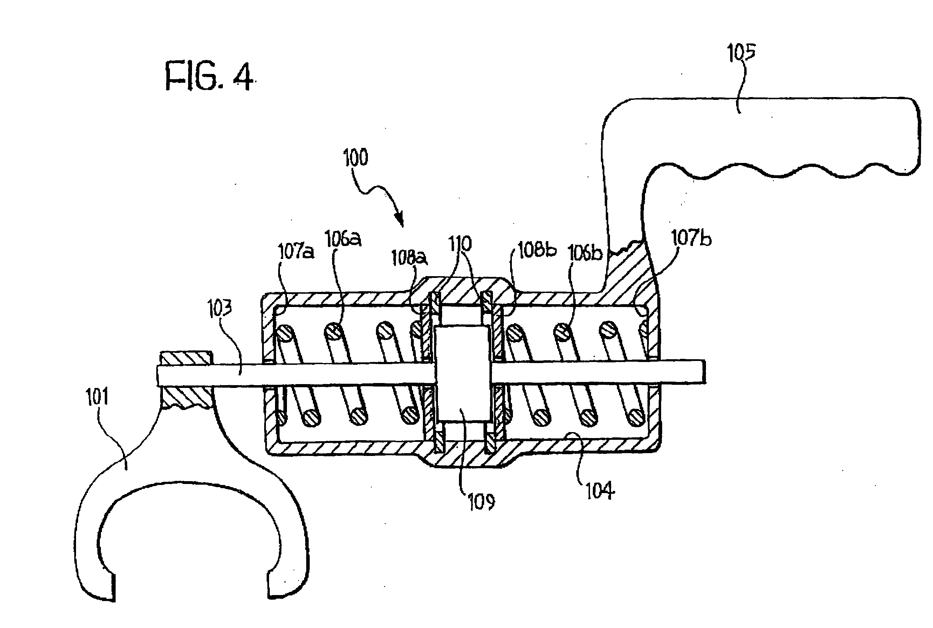

Figure 3 is a view of the control system of Figure 1, in longitudinal section and on an enlarged scale.

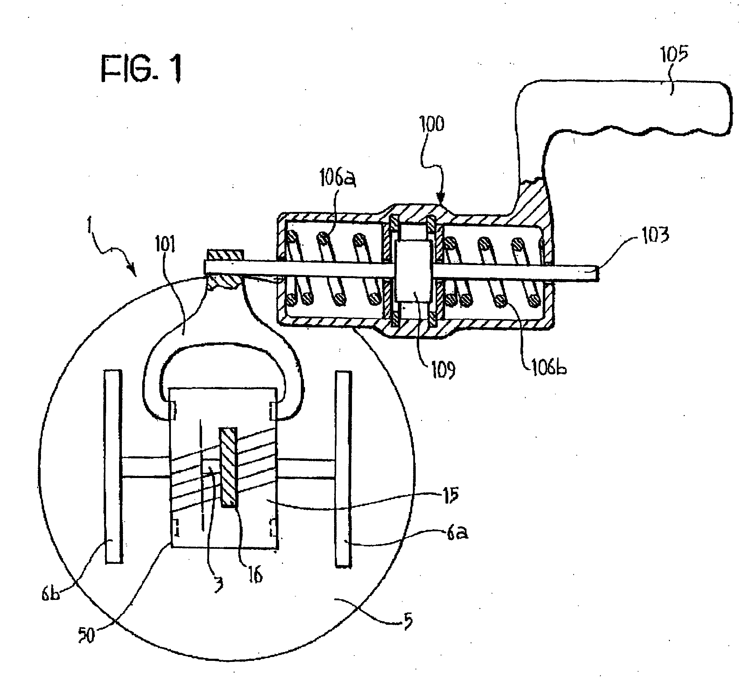

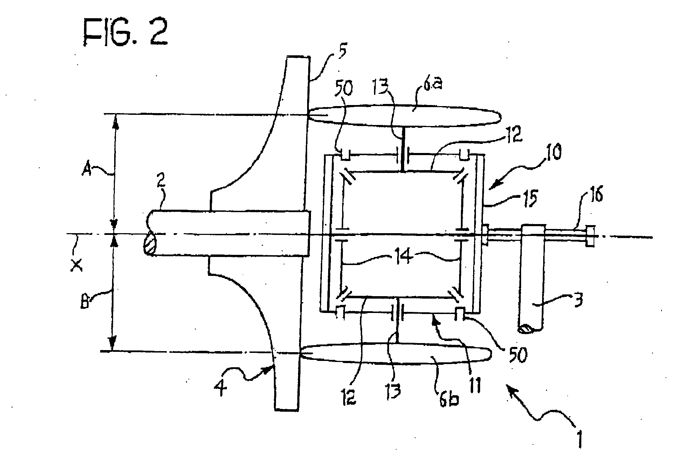

A transmission with a continuously variable transmission ratio, which is the subject of a patent application of the same date in the name of the same Applicant, is generally indicated 1 in Figures 1 and 2. The transmission 1 is subject to the control of a transmission-ratio variation control system 100, which can vary the ratio continuously and intrinsically safely in accordance with the technical teaching offered by the present invention.

A drive-input shaft 2 and a drive-output shaft 3 are shown in the transmission 1. The expressions "drive input" and "drive output" are wholly conventional since, in the transmission 1, as in many transmissions, the functions of the two shafts 2, 3 can be reversed without adversely affecting its operation.

The shaft 2 is rotated about its axis X and a disc 4 having a friction surface 5 is fixed for rotation therewith. Two driven friction wheels 6a, 6b are urged against the surface 5 and can be displaced over it so as to vary the distances A, B between the respective points of contact with the surface 5 and the axis of rotation X of the shaft 2. The wheels 6a, 6b thus form, with the disc 4, respective disc-and-wheel continuous speed variators (in this connection, see Perucca - Dizionario di ingegneria (Dictionary of engineering) - under the headword "variatore" (variator)).

An external preloading system (not shown) ensures the friction necessary for the transmission of the drive, without slippage, between the wheels 6a, 6b and the disc 4. Since the wheels 6a, 6b lie on opposite sides of the axis X, they will be driven by being rotated by the disc 4 about their own axes at speeds proportional to the respective distances A, B from the axis X, and in opposite directions.

The connection between the wheels 6a, 6b and the drive-output shaft 3 is formed by a differential kinematic mechanism, generally indicated 10, of the type with bevel gears. The use of other differentials, for example, of the epicyclic type is also envisaged. The total motive power input to the transmission 1 by means of the shaft 2 is split by the differential kinematic mechanism 10 along two branches (hereinafter also referred to as planetary kinematic mechanisms), each associated with one of the two wheels 6a, 6b, and recombined at the output of the differential kinematic mechanism (by an algebraic sum that takes account of the direction of rotation of the two wheels).

The differential kinematic mechanism 10 comprises a cage 11 rotatably supporting crown wheels 12, fixed for rotation with the corresponding wheels 6a, 6b by means of respective drive-input shafts 13 and both meshing with planet gears 14. A ring gear 15 meshing with a pinion 16 fixed for rotation with the drive output shaft 3, is also mounted on the cage 11.

If the distance between the point of contact of the friction wheels 6a, 6b and the axis X is varied, the crown wheels 12 adopt different speeds of rotation. The drive is transmitted by the planet gears 14 to the cage 11 in accordance with the drive-transmission laws characteristic of the type of differential used. Since the displacement of the two friction wheels 6a, 6b can take place continuously, the transmission ratio of the transmission 1 will also vary continuously. The displacements of the wheels 6a, 6b may be independent, or dependent, or only one of the friction wheels may be displaced in order to bring about the desired variation of the transmission ratio. The operative control of the variation of the transmission ratio is preferably performed by displacing the entire differential kinematic mechanism 10 relative to the disc and to the driven shaft 3. Since it is possible, with this mechanism, to cause the wheels 6a, 6b to rotate in opposite directions, it is possible to deduce, from the drive-transmission law characteristic of the type of differential, values of the distances A and B such that the speed of rotation of the cage is zero and the speed of the drive output shaft 3 is consequently also zero. These distance values A and B correspond to a drive-reversal condition of the transmission 1 such that a further displacement of either of the two friction wheels 6a, 6b from the reversal condition will bring about rotation of the cage 11, or of the output shaft 3, in the opposite direction.

As stated, the operative control of the variation of the transmission ratio is preferably performed by displacement of the entire differential kinematic mechanism 10 relative to the disc 4 and to the driven shaft 3. For this purpose, the cage 11 is equipped with a collar 50 and the teeth of the ring gear 15 extend axially so as to be able to mesh with the pinion 16 whilst permitting an axial movement relative thereto.

The collar 50 houses and restrains axially a yoke 101 of the control system 100. The yoke 101 is fixed firmly to the end of a rod 103 guided slidably in a cylinder 104 provided with actuator means, represented schematically by a handle 105. The actuator means 105 enable a force for implementing the desired operative control (variation of the transmission ratio) to be applied to the cylinder 104 in the direction which tends to move the yoke 101 in corresponding manner.

The displacement of the cylinder 104 and of the rod 103 of the yoke 101 are correlated with one another by a resilient system which comprises two springs 106a, 106b, preloaded between respective opposed shoulders 107a, 107b of the cylinder 104 and respective opposed plates 108a, 108b, between which an annular projection 109 of the rod 103 is disposed. The springs preferably have equal preloading and are restrained by rings 110 which act on the plates 108a, 108b so as to prevent the preloading being applied to the rod 103 when it is in the central, neutral position relative to the cylinder 104. Preferably, the ring gear and pinion 15, 16 are a pair of spur gears or are formed by helical gears and, in any case, are such as to generate, in the presence of a torque transmitted, a thrust proportional to the twisting moment delivered by the transmission. It is desirable to keep this twisting moment below a predetermined limit, for reasons of reliability of the transmission and/or for reasons of safety.

The displacement of the cylinder 104 by the actuator means 105 translates into a corresponding displacement of the plates 108a, 108b, if the resisting thrust on the shaft 103 is less than the preloading of the springs 106a, 106b. A corresponding displacement of the cage 11 and of the wheels 6a, 6b is thus brought about, with a consequent variation of the transmission ratio consistent with the above-mentioned displacement.

If the resisting thrust on the shaft 103 is greater than the preloading of the springs, the spring which is subject to this thrust yields and is compressed so that the displacement of the cylinder 104 does not lead to a corresponding variation of the transmission ratio. However, the resilient load on the shaft 103 corresponding to the resilient deformation of the spring is maintained so that, upon cessation of the transmission-overload condition, the desired variation of the transmission ratio can take place.

The system thus permits displacement of the movable element of the transmission, with which the variation of the transmission ratio is correlated, whenever the twisting moment delivered by the transmission is below a predetermined threshold value. Whenever the twisting moment delivered by the transmission exceeds the predetermined threshold value, however, the displacement of the movable transmission element is no longer proportional to the displacement imparted by the actuator means and the value of the torque delivered is kept close to the predetermined threshold value.

The invention thus achieves the objects proposed, affording further advantages, amongst which is effective control of the torque transmitted within the limitations of acceptability for the safety and/or reliability of the transmission. Moreover, it enables the transmission ratio to be varied gradually whilst maintaining correct control of start-up and/or temporary overload torques.

The structural simplicity and good reliability of the device thus formed are also particularly noteworthy.

## Claims

1. A control system for a variable-ratio transmission (1) of the type in which the variation is controlled by displacing two elements of the transmission relative to one another (4, 10) along a displacement axis, and in which the elements can give rise to a thrust having a component along the displacement axis, which component is correlated with the torque transmitted by the transmission, the system including operative control means interposed between actuator means (105) and at least one (10) of the two transmission elements in order to instigate the displacement upon the operation of the actuator means, **characterized in that** resilient means (106a, 106b) are interposed between the operative control means and the actuator means and can yield resiliently as a result of the thrust component along the displacement axis when the said component exceeds a predetermined threshold value corresponding to a maximum value of the torque transmitted by the transmission.

2. A control system according to Claim 1 in which the resilient means (106a, 106b) comprise at least one preloaded spring.

3. A control system according to Claim 1 or Claim 2 in which the resilient means comprise at least two counteracting springs (106a, 106b) both active along the displacement axis.

4. A control system according to Claim 3 in which both of the springs (106a, 106b) are preloaded and are arranged so as to be inactive on the control means in the absence of a thrust having a component along the displacement axis.

5. A control system according to one or more of the preceding claims in which the operative control means comprise a rod (103) guided in a housing (104) of the springs (106a, 106b) and the springs are compressed between respective shoulders (107a, 107b) of the housing and an annular projection (109) of the rod (103).

6. A control system according to one or more of the preceding claims in which the displaceable elements comprise a ring gear and a pinion (16) at the output from the transmission.

7. A control system according to Claim 6 in which the ring gear (15) or the pinion (16) are spur gears and/or have helical teeth.
